# EUROPÄISCHE PATENTSCHRIFT

(11) **EP 0 623 251 B1**
(45) Veröffentlichungstag und Bekanntmachung des Hinweises auf die Patenterteilung: **13.12.1995**
(21) Anmeldenummer: 93902173.9
(22) Anmeldetag: 12.01.1993
(51) Int. Cl.: H02H 3/24, H04L 25/02

(54) **EINRICHTUNG ZUR SPANNUNGSVERSORGUNG AUS EINEM SIGNALGEBER**
DEVICE FOR PROVIDING ELECTRIC POWER FROM A SIGNAL TRANSMITTER
DISPOSITIF POUR L'ALIMENTATION EN TENSION A PARTIR D'UN EMETTEUR DE SIGNAUX

(30) Priorität: 24.01.1992 EP 92101181
(43) Veröffentlichungstag der Anmeldung: 09.11.1994
(73) Patentinhaber: SIEMENS AKTIENGESELLSCHAFT, 80333 München (DE)
(72) Erfinder: FICHTNER, Norbert, D-8402 Neutraubling (DE)
(86) Internationale Anmeldenummer: EP9300048
(87) Internationale Veröffentlichungsnummer: WO9315539

(56) Entgegenhaltungen:
- EP-A- 0 409 327
- GB-A- 2 119 206
- IBM TECHNICAL DISCLOSURE BULLETIN Bd. 16, Nr. 10, M rz 1974, NEW YORK Seite 3180 SPENCER 'dual-voltage sensing automatic power on reset'

## Beschreibung

Die Erfindung bezieht sich auf eine Einrichtung zur Spannungsversorgung aus einem Signalgeber mit zumindest zwei Signalausgängen für eine Last, die das Anlegen von Spannung zweierlei Polarität möglichst gleichzeitig erfordert, im einzelnen nach Gattungsbegriff von Patentanspruch 1. Die zur Spannungsversorgung heranzuziehenden Signalausgänge sind über Gleichrichterelemente, insbesondere Dioden, einem ersten Ausgang erster Polarität und einem zweiten Ausgang zweiter Polarität zugeordnet. Eine derartige Einrichtung zur Spannungsversorgung ist bekannt (GB-A-2 119 206).

Eine Last, die eine positive und eine negative Versorgungsspannung benötigt, ist beispielsweise ein elektronisches Gerät mit Chips. Wenn für eine derartige Last die Spannungsversorgung aus den Signalausgängen eines Signalgebers gewonnen werden soll, treten mehrere Schwierigkeiten auf:

Bei integrierten Schaltkreisen, ICs bzw. Chips, ist ihre Funktion nur garantiert, wenn ihre Versorgungsspannung gleichzeitig angelegt wird. Andernfalls, wenn nur eine der beiden Versorgungsspannungen, positiv oder negativ, angelegt wird, kann die Stromaufnahme erheblich zunehmen. Wenn der gezogene Strom andererseits in die Größenordnung des Kurzschlußstroms gerät, bricht die Spannung zusammen. Hierdurch würde die Informationsempfindlichkeit gestört. Darüber hinaus können beim Zusammenbruch der Spannung bzw. durch den Kurzschlußstrom empfindliche Schaltungselemente oder integrierte Schaltungen zerstört werden.

Um aus dem Spannungspotential einer Polarität beide Polaritäten bereitzustellen, ist es gebräuchlich, Spannungskonverter einzusetzen. Derartige Spannungskonverter arbeiten gerichtet und stehen üblicherweise nur in einer Richtung, als Umsetzer von positiver in negative Spannung, zur Verfügung.

Wenn nun vom Signalgeber in einem bestimmten Zustand nur negatives Potential gegen Erde bereitgestellt wird, kann ein Konverter, der positive in negative Spannung umwandelt ein positives Potential für die Last nicht bereitstellen. Falls Konverter beider Umwandlungsrichtung verfügbar wären, nähmen diese verhältnismäßig viel Raum ein und sie wären wirtschaftlich aufwendig.

Es sind die verschiedenartigsten Überwachungsschaltungen geläufig. So ist eine Überwachungsschaltung für eine symmetrische Spannungsversorgung mit einer positiven und einer negativen Spannung bekannt (EP-A-0 409 327), die eine Abschaltung vornimmt, sofern am Verbraucher eine positive oder negative Über- bzw. Unterspannung vorliegt.

Der Erfindung liegt die Aufgabe zugrunde, eine Einrichtung zu entwickeln, die einer Last von einem Signalgeber die Versorgungsspannung so bereitzustellen gestattet, daß Spannung beider Polarität im erforderlichen Ausmaß an Gleichzeitigkeit zur Verfügung gestellt wird.

Die Lösung der geschilderten Aufgabe erfolgt durch eine Einrichtung nach Patentanspruch 1. Hierbei werden die Ausgänge über ein von den zu berücksichtigenden Signalausgängen gesteuertes Schaltelement und über einen elektrisch in Reihe angeordneten Spannungskonverter mit der Last verbunden. Das Schaltelement unterbricht zumindest die Leitung, die das nicht konvertierbare Potential führt.

Hierdurch ist sichergestellt, daß der Last bezüglich Erde Versorgungsspannungen beider Polarität gleichzeitig zur Verfügung gestellt werden. Man kann die Gewinnung der Versorgungsspannung und den Schaltzeitpunkt, zu dem die Versorgungsspannung bereitgestellt wird, bezüglich der Signalausgänge entkoppeln: Hierzu eignet sich eine Einrichtung, bei der das Schaltelement an seinem Steuereingang mit den für den Steuervorgang zu berücksichtigenden Signalausgängen gesondert verbunden ist. Bei Wechselsignalen, und auch um einen Kurzschluß zwischen Signalausgängen zu vermeiden, bieten sich Gleichrichterelemente, insbesondere Dioden an. Das Schaltelement kann man an seinem Durchsatzeingang mit den für die Spannungsversorgung der Last heranzuziehenden Signalausgängen verbinden. Gegebenenfalls wieder über Gleichrichterelemente. Durch eine derartige Einrichtung nach Anspruch 2 kann man für die Gewinnung der Versorgungsspannung und für den Schaltzeitpunkt jeweils andere Signalausgänge heranziehen. Für eine derartige Weiterbildung der Einrichtung nach Patentanspruch 1 gibt es vielfältige Anwendungsmöglichkeiten.

Wenn die Schaltzeit des Schaltungselements, also die Zeitspanne bis zu der Spannungen beider Polarität der Last zur Verfügung gestellt werden, von den Anforderungen der Schaltungselemente in der Last nicht mehr vernachlässigbar ist, empfiehlt es sich, eine Energiespeicherung vorzusehen. So kann bei einer Einrichtung nach Anspruch 3 zwischen Signalgeber und Last eine Erdungsleitung durchgeführt werden, zwischen der und jedem der Anschlüsse für den Konverter ein Energiespeicher, insbesondere eine Kapazität, eingeschaltet ist. Durch entsprechende Wahl der Energiespeicher wird die Schaltdauer bezogen auf die Ladungszeit des Energiespeichers, bis er also die vorgegebene Spannung gegen Erde erreicht hat, vernachlässigbar.

Die Erfindung soll nun anhand von in der Zeichnung grob schematisch wiedergegebenen Ausführungsbeispielen näher erläutert werden:
- In FIG 1: ist ein einfaches Ausführungsbeispiel veranschaulicht.
- In FIG 2: ist eine Anordnung von Gleichrichterelementen wiedergegeben.
- In FIG 3: ist ein Ausführungsbeispiel dargestellt, bei dem man davon unabhängig ist, welche Signalausgänge für die Gewinnung der Versorgungsspannung und welche für den Schaltzeitpunkt herangezogen werden sollen.

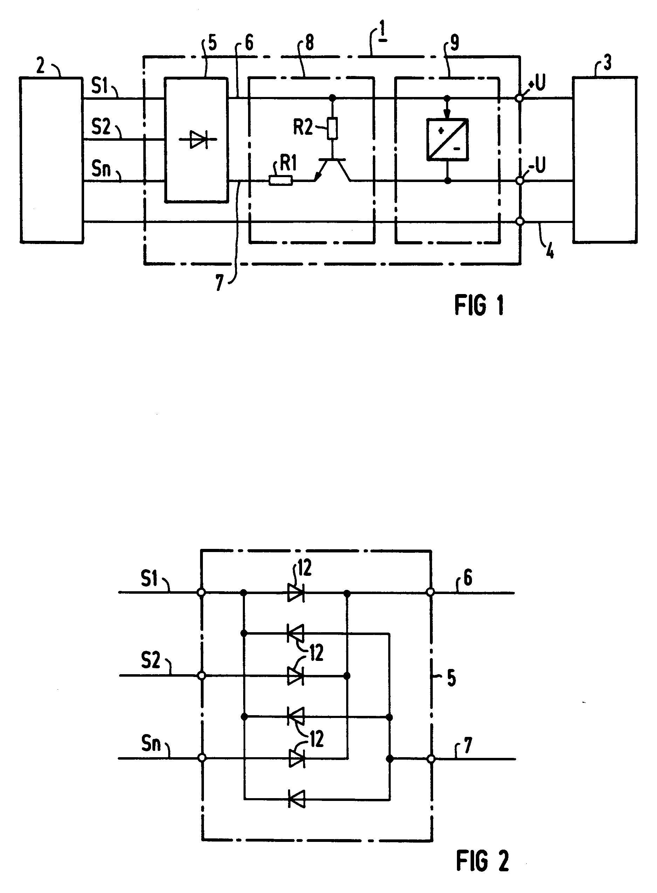

Die Einrichtung 1 zur Spannungsversorgung gewinnt aus den Signalspannungen S1 bis Sn eines Signalgebers 2 die Versorgungsspannung für eine Last 3. Bereitgestellt werden Versorgungsspannungen beider Polarität, also + U und - U. Außerdem wird im Ausführungsbeispiel ein Leiter 4 für Erde angeschlossen. Die zur Spannungsversorgung heranzuziehenden Signalausgänge, beispielsweise S1, S2 und Sn werden über Gleichrichterelemente in einer Anordnung 5 für Gleichrichterelemente, also in einem Gleichrichter, einem ersten Ausgang 6 erster Polarität und einem zweiten Ausgang 7 zweiter Polarität zugeordnet. An den Ausgängen 6 und 7 ist ein Schaltelement 8 und ein Spannungskonverter 9 angeschlossen. Das Schaltelement 8 ist von den zu berücksichtigenden Signalausgängen gesteuert. Im Ausführungsbeispiel sind das die Signalausgänge S1, S2 und Sn, die über den Vorwiderstand R2 an der Basis als Steuerelektrode eines Transistors Steuerspannung anlegen. Hierzu eignet sich eine Anordnung für Gleichrichterelemente nach FIG 2, die beispielsweise mit Dioden aufgebaut ist. Der Spannungskonverter 9 erzeugt bei anstehender positiver Spannung auch eine negative Spannung. Das Schaltelement 8 ist im Ausführungsbeispiel ein Transistor, der mit Beschaltungswiderständen R1 und R2 versehen ist. Im Ausführungsbeispiel ist dem Emitter der Widerstand R1 vorgeschaltet und der Basis der Widerstand R2. Diese Widerstände sorgen in bekannter Weise für geeignete Elektrodenspannungen. Der Transistor ist im Ausführungsbeispiel als npn-Transistor dargestellt.

Die Einrichtung zur Spannungsversorgung arbeitet bei einem Gleichrichter nach FIG 2 folgendermaßen:

Sobald einer der Signalausgänge, S1 bis Sn in den positiven Zustand übergeht, wird das Schaltelement 8 durchgeschaltet. Die Verzögerung durch die Schaltzeit des Transistors sei in einem bestimmen Anwendungsfall vernachlässigbar. Wenn auch negatives Potential am zweiten Ausgang 7 bereitgestellt wird, ist der nachgeschaltete Konverter ohne Funktion. Er kann allerdings in Lücken für die Bereitstellung negativen Potentials einspringen und dieses aus dem ihm zur Verfügung gestellten positivem Potential abgeben bzw. verstärken. Wenn an allen Signalausgängen nur positives Potential gewonnen werden kann, schaltet das Schaltelement 8 dennoch durch und ermöglicht es dem Spannungskonverter 9 unter den gegebenen Vorraussetzungen zeitgleich Spannungen beider Polarität der Last 3 zuzuführen.

Der Gleichrichter 5 nach FIG 2, eine Anordnung von Dioden, ordnet alle Signalausgänge S1 bis Sn dem ersten Ausgang 6 erster Polarität und dem zweiten Ausgang 7 zweiter Polarität zu. Wenn bestimmte Signalausgänge zur Spannungsversorgung und im Ausführungsbeispiel nach FIG 1 auch zur Gewinnung des Schaltzeitpunktes nicht herangezogen werden sollen, kann eine entsprechende Zuordnung bzw. Verbindung zum ersten Ausgang 6 bzw. zum zweiten Ausgang 7 unterbleiben.

Zur Einrichtung nach FIG 1 kann auch ein inverser Aufbau erstellt werden, so daß es genügt, wenn negative Signalspannung bereitgestellt wird, um Versorgungsspannungen beider Polarität zeitgleich für die Last zu gewinnen. Wenn nach FIG 1 nur negative Signalspannung ansteht, kann das Schaltelement 8 nicht durchschalten, wodurch verhindert wird, daß der Last 3 lediglich Spannung einer Polarität angelegt wird.

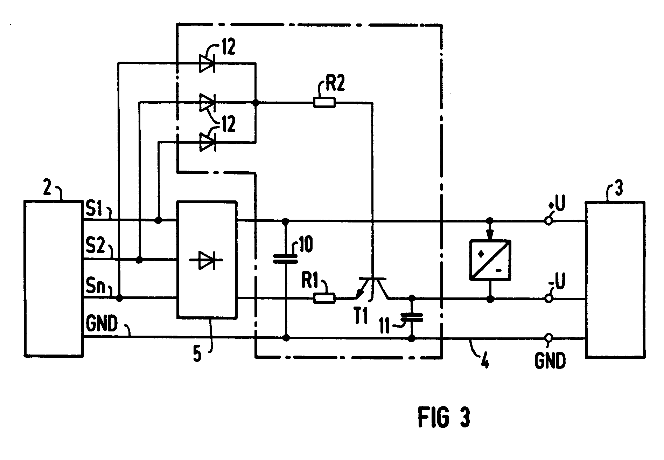

Bei der Weiterbildung nach FIG 3 ist zum einen das Schaltelement 8 an seinem Steuereingang mit den für den Steuervorgang zu berücksichtigenden Signalausgängen gesondert verbunden. Zum anderen ist zwischen Signalgeber und Last eine Erdungsleitung 4 durchgeführt, zwischen der und jedem der Anschlüsse für den Konverter 9 ein Energiespeicher, insbesondere eine Kapazität 10 bzw. 11, eingeschaltet ist.

Die Anordnung 5 für Gleichrichterelemente, beispielsweise Dioden 12 nach FIG 2 ermöglicht über jeweils ausgeführte oder nicht ausgeführte Verbindungen Signalausgänge Sl bis Sn für die Spannungsversorgung der Last 3 auszuwählen. Hiervon unabhängig kann über die dem Steuereingang und dem Beschaltungswiderstand R2 angeschlossenen Verbindungen zu den Signalausgängen S1 bis Sn mittels durchgeführter oder nicht durchgeführter Verbindungen eine Auswahl hinsichtlich der Signalausgänge getroffen werden, die für einen Schaltzeitpunkt berücksichtigt werden sollen. Die Auswahl für den Schaltzeitpunkt ist beim Ausführungsbeispiel nach FIG 3 von der Auswahl zur Gewinnung der Versorgungsspannung unabhängig bzw. entkoppelt. Von der Erdungsleitung 4, die zwischen Signalgeber 2 und Last 3 durchgeführt ist, und jedem der Anschlüsse für den Konverter 9 ist als Energiespeicher eine Kapazität 10 bzw. 11 eingeschaltet. Die Kapazitäten lassen sich so auswählen, daß trotz des Schaltvorgangs beide Polaritäten der Last unter dem Blickwinkel der Erfordernis ihrer Bauelemente als zeitgleich anzusehen wirksam werden.

Wesentlich ist, daß bei nur einem geschalteten Leiter das Schaltelement 8 zumindest den Leiter schaltet, an dem die nicht konvertierbare Spannung ansteht. Es wird dadurch der Funktion nach ein allpoliger Schalter nachgebildet, der nur dann eine Durchverbindung herstellen dürfte, wenn Spannungen beider Polarität anstehen.

## Patentansprüche

1. Einrichtung zur Spannungsversorgung aus einem Signalgeber (2) mit zumindest zwei Signalausgängen für eine Last (3), die das Anlegen von Spannung zweierlei Polarität möglichst gleichzeitig erfordert, wozu die zur Spannungsversorgung heranzuziehenden Signalausgänge (aus S1 bis Sn) über Gleichrichterelemente, insbesondere Dioden (12), einem ersten Ausgang (6) erster Polarität und einem zweiten Ausgang (7) zweiter Polarität zugeordnet werden,
**dadurch gekennzeichnet**, daß die Ausgänge (6, 7) über ein von den zu berücksichtigenden Signalausgängen (aus S1 bis Sn) gesteuertes Schaltelement (8) und über einen elektrisch in Reihe angeordneten Spannungskonverter (9) mit der Last (3) verbunden sind, wobei das Schaltelement (8) zumindest die Leitung unterbricht, die das nicht konvertierbare Potential führt.

2. Einrichtung nach Anspruch 1,
**dadurch gekennzeichnet**,
daß das Schaltelement (8) an seinem Steuereingang mit den für den Steuervorgang zu berücksichtigenden Signalausgängen (aus S1 bis Sn) gesondert verbunden ist, gegebenenfalls, etwa bei Wechselsignalen, über Gleichrichterelemente, insbesondere Dioden (12), und daß das Schaltelement (8) an seinem Durchsatzeingang mit den für die Spannungsversorgung der Last heranzuziehenden Signalausgängen (aus S1 bis Sn) verbunden ist, gegebenenfalls, etwa bei Wechselsignalen, über Gleichrichterelemente, insbesondere Dioden (12).

3. Einrichtung nach Anspruch 1 oder 2,
**dadurch gekennzeichnet**,
daß zwischen Signalgeber (2) und Last (3) eine Erdungsleitung (4) durchgeführt ist, zwischen der und jedem der Anschlüsse für den Konverter (9) ein Energiespeicher, insbesondere eine Kapazität (10, 11), eingeschaltet ist.

## Claims

1. Device for supplying voltage from a signal transmitter (2) having at least two signal outputs for a load (3) which requires the application of voltage of two different polarities as simultaneously as possible, for which purpose the signal outputs (from S1 to Sn), which are to be brought into use for the voltage supply, are allocated by way of rectifier elements, in particular diodes (12), to a first output (6) of the first polarity and to a second output (7) of the second polarity, characterised in that the outputs (6, 7) are connected to the load (3) by way of a switching element (8), which is controlled by the signal outputs (from S1 to Sn) which are to be taken into account, and by way of a voltage converter (9), which is arranged electrically in series therewith, with the switching element (8) interrupting at least the line which carries the non-convertible potential.

2. Device according to claim 1, characterised in that the control input of the switching element (8) is connected separately to the signal outputs (from S1 to Sn) which are to be taken into account for the control process, if appropriate - for instance in the case of alternating signals - by way of rectifier elements, in particular diodes (12), and in that the throughput input of the switching element (8) is connected to the signal outputs (from S1 to Sn) which are to be brought into use for the voltage supply of the load, if appropriate - for instance in the case of alternating signals - by way of rectifier elements, in particular diodes (12).

3. Device according to claim 1 or 2, characterised in that an earth line (4) is led through between signal transmitter (2) and load (3), connected between which earth line and each of the terminals for the converter (9) there is an energy store, in particular a capacitor (10, 11).

## Revendications

1. Dispositif d'alimentation en tension par un générateur de signaux (2) comportant au moins deux sorties de signaux, d'une charge (3), qui requiert autant que possible simultanément l'application d'une tension ayant deux types de polarités, les sorties de signaux (parmi S1 à Sn), qui sont à utiliser pour l'alimentation en tension, étant associées à cet effet, par l'intermédiaire d'éléments redresseurs, notamment de diodes (12), à une première sortie (6) d'une première polarité et à une seconde sortie (7) d'une seconde polarité,
caractérisé par le fait que les sorties (6,7) sont reliées à la charge (3) par l'intermédiaire d'un élément d'interruption (8), qui est commandé par les sorties de signaux (parmi S1 à Sn) devant être prises en compte, et par l'intermédiaire d'un convertisseur de tension (9) branché électriquement en série, l'élément d'interruption (8) interrompant au moins la ligne, qui applique le potentiel non convertible.

2. Dispositif suivant la revendication 1, caractérisé par le fait que l'élément d'interruption (8) est relié séparément, par son entrée de commande, aux sorties de signaux (parmi S1 à Sn), devant être prises en compte pour l'opération de commande, éventuellement, par exemple dans le cas de signaux alternatifs, par l'intermédiaire d'éléments redresseurs, notamment de diodes (12), et que l'élément d'interruption (8) est relié, par son entrée de débit, aux sorties de signaux (parmi S1 à Sn) devant être utilisées pour l'alimentation en tension de la charge, éventuellement, par exemple dans le cas de signaux alternatifs, par l'intermédiaire d'éléments redresseurs, notamment de diodes (12).

3. Dispositif suivant la revendication 1 ou 2, caractérisé par le fait qu'une ligne (4) de raccordement à la masse s'étend entre le générateur de signaux (2) et la charge (3), et un accumulateur d'énergie, notamment une capacité (10,11) est branché entre cette ligne de raccordement à la terre et chacune des bornes du convertisseur (9).
